Europäisches Patentamt

European Patent Office

Office européen des brevets

(11) Veröffentlichungsnummer: **0 033 937**
**A1**

(12) **EUROPÄISCHE PATENTANMELDUNG**

(21) Anmeldenummer: **81100743.4**

(22) Anmeldetag: **03.02.81**

(51) Int. Cl.³: **D 06 F 37/36,** F 16 H 55/56

(30) Priorität: **06.02.80 DE 3004219**

(43) Veröffentlichungstag der Anmeldung: **19.08.81**
**Patentblatt 81/33**

(84) Benannte Vertragsstaaten: **FR GB IT SE**

(71) Anmelder: **EATON S.A.M., 14 Boulevard du Bord de Mer Boîte Postale 84, Monaco (MC)**

(72) Erfinder: **Buffet, Jean-Claude, 21, avenue Paul Doumer, F-06240 Beausoleil (FR)**
Erfinder: **Rey, Pierre Jean-Marie, 23, chemin de la Bordina, F-06240 Beausoleil (FR)**
Erfinder: **Buffet, Eric, 21, avenue Paul Doumer, F-06240 Beausoleil (FR)**

(74) Vertreter: **Patentanwälte Dipl.-Ing. W. Scherrmann Dr.-Ing. R. Rüger, Webergasse 3 Postfach 348, D-7300 Esslingen (Neckar) (DE)**

(54) **Antriebsvorrichtung, insbesondere für Waschmaschinen.**

(57) Bei einer Antriebsvorrichtung für Waschmaschinen ist eine auf der Antriebswelle des Motors angeordnete Keilriemenscheibe (1) vorgesehen, deren wirksamer Durchmesser verstellbar ist und die einen feststehenden Flansch (32) und eine gegen diesen axial verschiebbaren drehfesten Flansch (26) aufweist, der durch an einer Stützscheibe (25) sich abstützende Fliehgewichte (53, 54, 55) verschiebbar ist, die durch eine entriegelbare Sperreinrichtung in der Stellung mit dem kleinsten wirksamen Keilriemenscheibendurchmesser gehalten sind.

Um die Montage der Antriebsvorrichtung zu erleichtern und ihren Aufbau zu vereinfachen, ist die Anordnung derart getroffen, dass die Sperreinrichtung achsparallel gelagerte, die Fliehgewichte (53, 54, 55) tragende Schwenkarme (50, 51, 52) enthält, die bis auf einen Schwenkarm (50) durch den, bezogen auf einen Umlaufsinn, jeweils davor angeordneten Schwenkarm (50, 51) verriegelt sind, und der nicht durch einen benachbarten Schwenkarm verriegelte Schwenkarm (50) in einen Sperrhebel (72) einrastbar ist, der durch einen exzentrisch angeordneten Auslösehebel (71) betätigbar ist.

Patentanwälte Dipl.-Ing. W. Scherrmann Dr.-Ing. R. Rüger
7300 Esslingen (Neckar), Webergasse 3, Postfach 348

2. Februar 1981

PA 181 EU bbeh

Telefon
Stuttgart (07 11) 35 65 39
35 96 19
Telex 07 256610 smru
Telegramme Patentschutz
Esslingenneckar

**0033937**

- 1 -

Eaton S.a.M., Monaco

**Antriebsvorrichtung, insbesondere für Waschmaschinen**

Die Erfindung betrifft eine Antriebsvorrichtung mit einer auf der Antriebswelle des Motors angeordneten Keilriemenscheibe, deren wirksamer Durchmesser verstellbar ist, mit einem feststehenden Flansch und einem gegen diesen axial verschiebbaren drehfesten Flansch, der durch an einer Stützscheibe sich abstützende Fliehgewichte verschiebbar ist, die durch eine entriegelbare Sperreinrichtung in der Stellung mit dem kleinsten wirksamen Keilriemenscheibendurchmesser gehalten sind.

Aus der DE-OS 1 933 045 ist eine Keilriemenscheibe mit veränderlichem wirksamem Durchmesser bekannt, bei der die Fliehgewichte mit Hilfe einer Arretierung in einer Stellung gehalten werden, die dem kleinsten wirksamen Keilriemenscheibendurchmesser entspricht. Die Fliehgewichte sind mit jeweils einem Fortsatz in Schlitzen der Stützscheibe seitlich geführt. Die Fortsätze ragen durch die Stützscheibe hindurch und greifen in Ausnehmungen von Sperrhebeln ein. Die Sperrhebel sind an der Stützscheibe drehbar angelenkt und verlaufen in der Sperrstellung etwa parallel zu der kegelförmigen Außenfläche der Stützscheibe.

- 2 -                                    0033937

An dem, bezogen auf die Lagerung und die Ausnehmung zum Arretieren gegenüberliegenden Ende, ist jeder Sperrhebel an einem federvorbelasteten Stempel angelenkt, der sich koaxial in der Keilriemenscheibe befindet. Durch die auf den Stempel wirkende Feder werden die Sperrhebel in die Arretierungsstellung vorgespannt.

Durch einen axialen Druck auf den Stempel werden die Sperrhebel von der kegeligen Fläche der Stützscheibe weggeschwenkt und geben die Fortsätze der Fliehgewichte frei. Nach der Freigabe der Fliehgewichte können sich diese in den Radialschlitzen der Stützscheibe geführt nach außen bewegen und den bewegbaren Flansch in Richtung auf den starren Flansch verschieben.

Wegen der koaxialen Anordnung der Feder und des Stempels für die Sperrhebel ist es nicht möglich, eine durch die Keilriemenscheibe hindurchreichende Motorwelle zu verwenden. Außerdem wird durch die Anordnung des Stempels und des Arretierhebels das Aufpressen der Keilriemenscheibe auf die Motorwelle erschwert.

Aufgabe der Erfindung ist es, eine Antriebsvorrichtung der eingangs genannten Art für vollautomatische Waschmaschinen zu schaffen, bei der die Nabe der Keilriemenscheibe von beiden Seiten frei zugänglich und nur ein Sperrhebel für mehrere Fliehgewichte erforderlich ist.

Zur Lösung dieser Aufgabe ist die erfindungsgemäße Antriebsvorrichtung dadurch gekennzeichnet, daß die Sperreinrichtung achsparallel gelagerte, die Fliehgewichte tragende Schwenkbarme enthält, die bis auf einen Schwenkarm durch den, bezogen auf einen Umlaufsinn, jeweils davor angeordneten Schwenkarm verriegelt sind, und der nicht durch einen benachbarten Schwenkarm verriegelte Schwenkarm in einen Sperrhebel einrastbar ist, der durch einen exzentrisch angeordneten Auslösehebel betätigbar ist.

Wenn nach Beendigung des Schleudervorganges der Motor stillgesetzt wird und ausläuft, bewegen sich die Fliehgewichte wieder radial nach innen, wobei sich die Schwenkarme bis auf einen Schwenkarm gegenseitig verriegeln, so daß nur für einen Schwenkarm ein Sperrhebel erforderlich ist.

Durch die axial versetzte Anordnung des Auslösemechanismus für die Fliehgewichte wird die Montage der Keilriemenscheibe auf der Motorwelle erleichtert. Es ist nämlich möglich, das Montagewerkzeug beim Aufdrücken der Keilriemenscheibe auf die Motorwelle unmittelbar auf der Nabe aufzusetzen. Wahlweise kann die erfindungsgemäße Keilriemenscheibe auch mit einer Spielpassung auf einer abgesetzten Motorwelle aufgesetzt werden, wobei dann die Sicherung mit Hilfe einer auf die abgesetzte Motorwelle aufgeschraubte Mutter erfolgt.

In einer vorteilhaften Weiterbildung der erfin-dungsgemäßen Antriebsvorrichtung sind die Schwenk-arme der Fliehgewichte an ihren radial außenliegenden Enden alle gleich gestaltet und legen sich mit einer Nase an einen zylinderartigen Ansatz des verschiebbaren Flansches der Keilriemenscheibe an. Auf diese Weise wird zwangsläufig sichergestellt, daß sich alle Fliehgewichte auf demselben Flugkreisdurchmesser befinden.

Zweckmäßigerweise erfolgt die drehfeste Kupplung
des verschiebbaren Flansches mit der Nabe über
den zylinderartigen Ansatz, der zu diesem Zweck
in Richtung der Nabenachse verlaufende Schlitze
aufweist, in die entsprechend ausgebildete, an
die Stützscheibe einstückig angeformte Mitnehmer eingreifen.

Um eine bessere Führung des verschiebbaren Flansches auf der Nabe zu erzielen, weist dieser eine Hülse auf, die auf der Außenumfangsfläche der
Nabe gelagert ist.

Um die Spannung des Keilriemens bei den unterschiedlichen wirksamen Durchmessern der Keilriemenscheibe sicherzustellen, weist die erfindungsgemäße Antriebsvorrichtung eine Keilriemenspannvorrichtung auf, die entweder auf der Motorwelle
oder auf einer Verlängerung der Nabe gelagert
ist. Die Keilriemenspannvorrichtung weist zwei
zueinander etwa V-förmig angeordnete Spannarme
auf, von denen einer gegenüber dem anderen Spannarm verschwenkbar ist. Die äußeren Enden der Spannarme lagern zwei Spannrollen, die mit der Keilriemenscheibe fluchten.

Mittels einer Feder, deren Widerlager an der Keilriemenspannvorrichtung ortsfest angeformt ist,
wird der bewegliche Spannarm in die Keilriemenspannstellung eingespannt.

In einer vorteilhaften Weiterbildung sind die Keilriemenspannvorrichtung und die Spannrollen jeweils mit selbstschmierenden Bronzelagern gelagert.

Eine besonders raumsparende Anordnung ergibt sich, wenn der Hubmagnet zum Betätigen des Auslösehebels ebenfalls auf der Keilriemenspannvorrichtung angebracht ist. Der Hubmagnet kann ein U-Profil aufweisen, das durch den Anker des Hubmagneten betätigt wird. Die Anordnung ist hierbei so getroffen, daß bei betätigtem Hubmagnet ein Schenkel des U-Profiles in die Flugbahn des Auslösehebels gebracht ist, um so die Fliehgewichte zu entriegeln. Nach der Entriegelung sind der Auslösehebel und der über die zugehörige Welle gekuppelte Sperrhebel derart verschwenkt, daß der Auslösehebel aufgrund der Zentrifugalkraft, die an beiden Hebeln angreift, gegen die Wirkung der Rückstellfeder auf einer Flugbahn mit kleinerem Durchmesser bleibt, so daß er nicht mehr das U-Profil des Hubmagneten streift. Erst wenn die Drehzahl sinkt und auch die Fliehgewichte in die ursprüngliche Lage zurückkehren, kommen der Sperrhebel und der Auslösehebel in die Ausgangslage zurück. Mit Hilfe einer Feder wird nach dem Auslösen das U-Profil wieder aus der ursprünglichen Flugbahn herausgezogen.

In der Zeichnung sind Ausführungsbeispiele des Gegenstandes der Erfindung dargestellt. Es zeigen

Figur 1 eine Antriebsvorrichtung gemäß der Erfindung mit einer stufenlos ver-

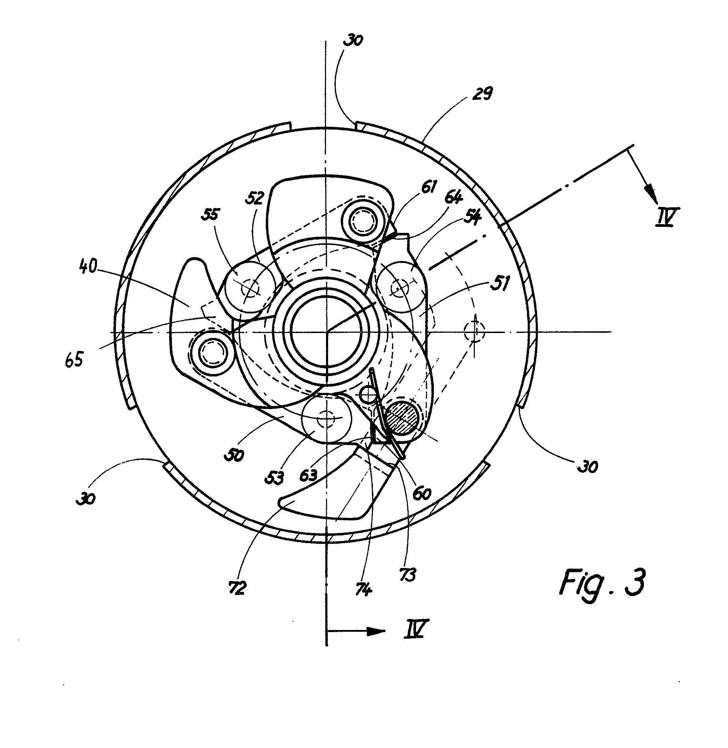

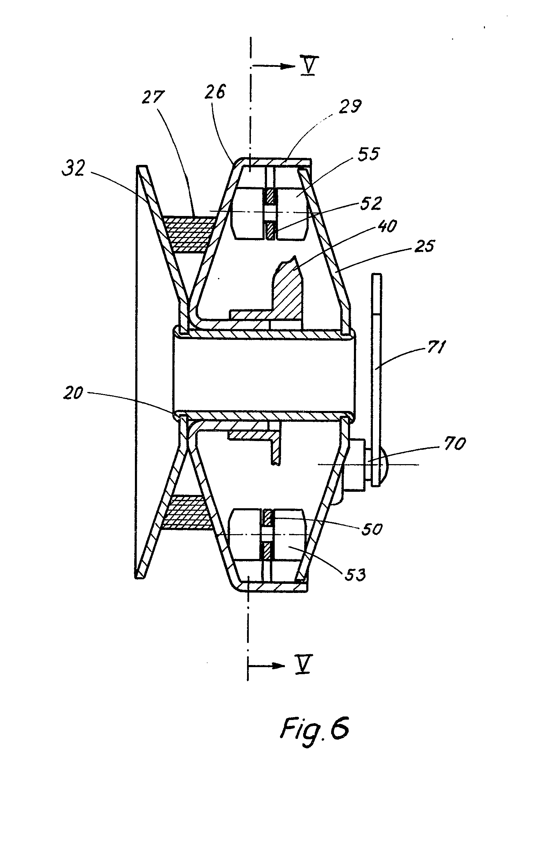

stellbaren Keilriemenscheibe, einer Keilriemenspannvorrichtung und einem Hubmagneten in perspektivischer Darstellung,
Figur 2 die Antriebsvorrichtung nach Figur 1, geschnitten entlang der Linie II-II
nach Figur 1, in einer Seitenansicht,
Figur 3 eine Keilriemenscheibe für eine Antriebsvorrichtung gemäß der Erfindung mit
einer verkürzten Nabe und eingeschwenkten
Fliehgewichten, geschnitten entlang der
Linie III-III nach Figur 4, in einer Seitenansicht, Figur 4 die Keilriemenscheibe
nach Figur 3, geschnitten entlang der Linie IV-IV nach Figur 3, in einer Seitenansicht, Figur 5 die Keilriemenscheibe nach
Figur 3, jedoch mit ausgeschwenkten Fliehgewichten, geschnitten entlang der Linie
V-V nach Figur 6, in einer Seitenansicht
und Figur 6 die Keilriemenscheibe nach

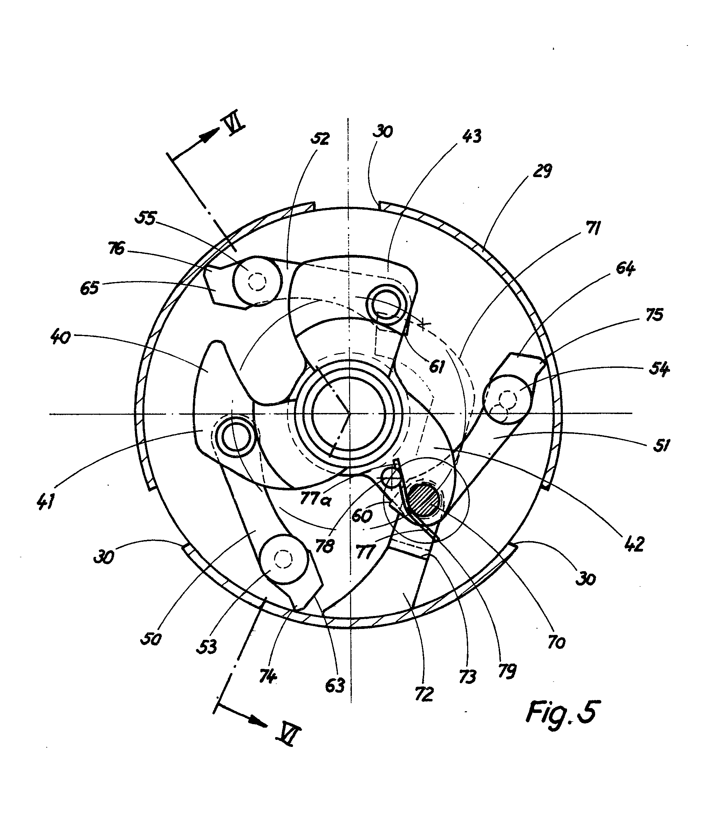

Figur 5, geschnitten entlang der Linie
VI-VI nach Figur 5, in einer Seitenansicht.

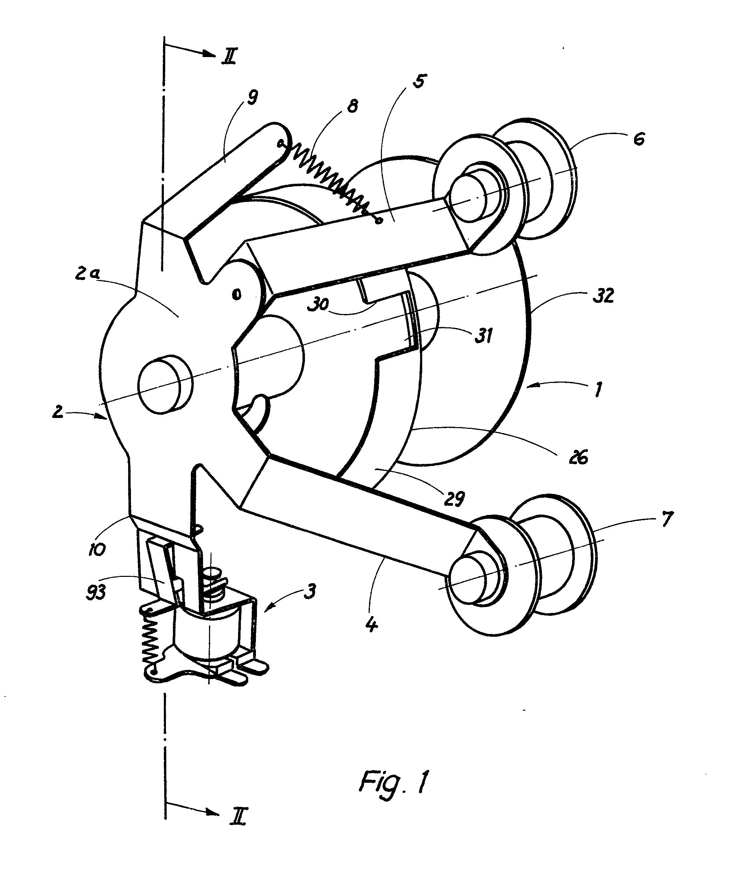

In Figur 1 ist eine Antriebsvorrichtung dargestellt, die eine stufenlos verstellbare Keilriemenscheibe 1, eine Keilriemenspannvorrichtung 2
sowie einen Hubmagneten 3 aufweist. Die Keilriemenspannvorrichtung 2 enthält zwei Spannarme 4
und 5, an deren äußeren Enden jeweils eine
Spannrolle 6 bzw. 7 drehbar gelagert ist.

Die Lagerung der Spannrollen 6 und 7 erfolgt
fliegend mit Hilfe von nicht sichtbaren selbstschmierenden Bronzelagern. Der Spannarm 5 ist an
seinem der Spannrolle 6 gegenüberliegenden Ende schwenkbar an einem Halteflansch 2a der Keilriemenspannvorrichtung 2 gelagert. Mit Hilfe einer
Feder 8, die an einem Ausleger 9 der Keilriemenspannvorrichtung 2 befestigt ist, ist der Spannarm 5 in die Keilriemenspannstellung vorspannbar.

Der Hubmagnet 3 ist an einem weiteren Ausleger
10 der Keilriemenspannvorrichtung 2 befestigt.

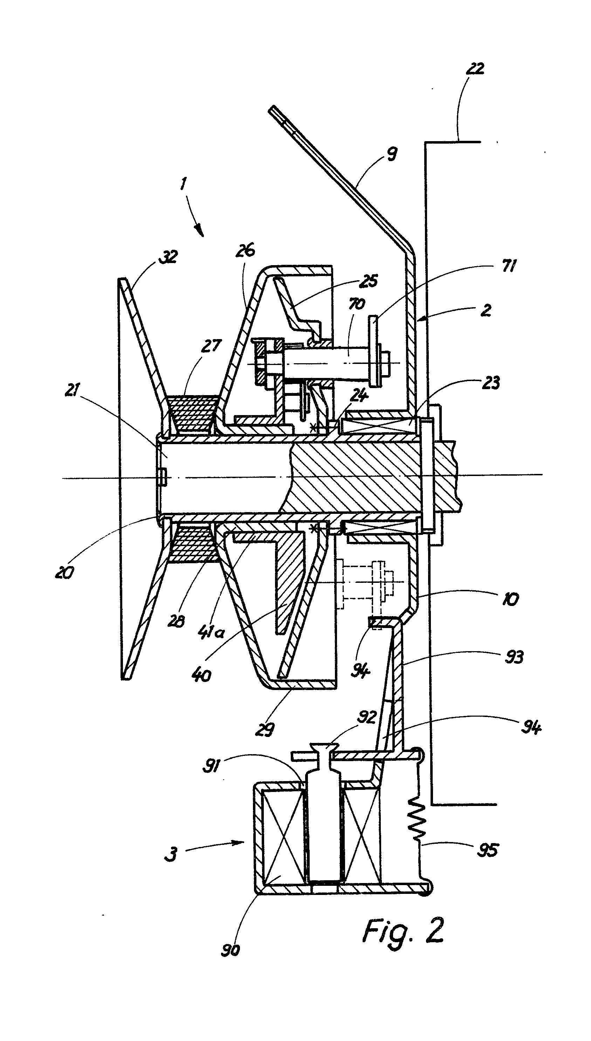

Die Antriebsvorrichtung nach Figur 1 ist in Figur 2 geschnitten dargestellt, wobei jedoch aus
Gründen der Übersichtlichkeit die Spannarme 4
und 5 sowie die Spannrollen 6, 7 und die Feder 8
nicht mitgezeichnet sind.

Die Keilriemenscheibe 1 weist eine Nabe 20 auf,
die auf die Welle 21 eines Motors 22 aufgedrückt
ist. Die Nabe 20 ist in Richtung auf den Motor
22 verlängert, um mit Hilfe eines selbstschmierenden Bronzelagers 23 die Keilriemenspannvorrichtung 2 zu lagern. Neben dem Bronzelager 23
ist in Richtung auf die Keilriemenscheibe 1 an
der Nabe 20 ein Bund 24 vorgesehen, mit dem eine
etwa kegelstumpfförmige Stützscheibe 25 der Keilriemenscheibe 1 starr verbunden ist. Die starre
Verbindung zwischen der Stützscheibe 25 und dem
Bund 24 bzw. der Nabe 20 kann durch Schweißen,
Löten oder eine lösbare Verbindung wie Verschrauben erfolgen.

Links von der Stützscheibe 25, bezogen auf die
Darstellung von Figur 2, befindet sich ein verschieblicher Flansch 26 der Keilriemenscheibe 1,
der für einen Keilriemen 27 eine Antriebsfläche

0033937

darstellt und etwa die Gestalt der Mantelfläche eines Kegelstumpfes aufweist.

An den Flansch 26 ist eine auf der Nabe 20 verschiebliche Hülse 28 einstückig angeformt. Ferner weist der verschiebliche Flansch 26 einen
zylinderartigen Ansatz 29 auf, dessen Innendurchmesser größer als der Außendurchmesser der
Stützscheibe 25 ist. Der zylinderartige Ansatz
29 ist an seiner Umfangsfläche mit Schlitzen 30
versehen, die in Richtung der Drehachse der Keilriemenscheibe 1 verlaufen und so gestaltet sind,
daß sie an die Stützscheibe 25 angeformte Mitnehmer 31 aufnehmen können. Die Anordnung aus Mitnehmer 31 und Schlitz 30 ist so getroffen, daß
der bewegliche Flansch 26 über die Mitnehmer 31
mit der Nabe 20 drehfest gekuppelt, jedoch gegen
die Stützscheibe 25 axial verschiebbar ist.

Die zweite Mitnahmefläche für den Keilriemen 27
wird durch einen weiteren Flansch 32 der Keilriemenscheibe 1 gebildet. Der Flansch 32 ist
starr mit der Nabe 20 verbunden. Die starre Verbindung kann beispielsweise durch Vernieten oder
Umbördeln der Nabe 20 erfolgen.

Der verschiebliche Flansch 26 und die Stützscheibe 25 bilden zusammen einen kreisringförmigen Hohlraum mit etwa dreieckigem Querschnitt.
In diesem von dem beweglichen Flansch 26 und der
Stützscheibe 25 gebildeten Hohlraum befindet
sich ein Halteflansch 40, der mit einem hülsenartigen Ansatz 40a auf der Hülse 28 axial verschieblich gelagert ist. Der Halteflansch 40 ist
in seiner Gestalt in den Figuren 3 und 5 erkennbar. Er weist drei, im wesentlichen radial nach außen stehende Abschnitte 41, 42 und 43 auf, die zum Auswuchten der Keilriemenscheibe unterschiedlich groß ausgebildet sind. An jedem radial nach außen stehenden Abschnitt 41, 42 und 43 des Halteflansches 40 ist jeweils ein Schwenkarm 50, 51 und 52 gelagert. Die Drehpunkte der Schwenkarme 50, 51 und 52 haben jeweils den gleichen Abstand von der Achse der Keilriemenscheibe 1 und stehen zueinander jeweils im gleichen Abstand.

Jeder Schwenkarm 50, 51, 52 trägt in der Nähe seines dem Drehpunkt gegenüberliegenden Endes ein etwa zylinderförmiges Fliehgewicht 53, 54, 55. Die Schwenkarme 51 und 52 weisen an ihrem lagerseitigen Ende jeweils eine Anschlagfläche 60, 61 auf, die bei radial nach innen geschwenktem Fliehgewicht bzw. Schwenkarm mit einem Fortsatz 63 bzw. 64 des Schwenkarmes 50 bzw. 51 zusammenwirkt. Aus Gründen der Auswuchtung der Keilriemenscheibe ist ebenfalls der Schwenkarm 52 mit einem entsprechenden Fortsatz 65 ausgestattet. Der Schwenkarm 50 weist jedoch keine Anschlagfläche an dem lagerseitigen Ende auf.

Die Lagerung des Schwenkarmes 51 ist durch eine Welle 70 gebildet, die durch die Stützscheibe 25 hindurchreicht und auf der anderen Seite einen ungefähr spiralig geformten Auslösehebel 71 drehfest haltert. Das Ende der Welle 70, das in den Zwischenraum zwischen dem verschiebbaren Flansch 26 und der Stützscheibe 25 ragt, trägt einen drehfest mit ihr verbundenen Sperrhebel 72. Der Sperrhebel 72 ist in der Nähe der Welle 70 mit einer Ausnehmung 73 versehen.

Bei radial nach innen verschwenkten Fliehgewichten 53, 54, 55 greift in die Ausnehmung 73 des Sperrhebels 72 eine Nase 74 ein, die an dem Schwenkarm 50 in der Nähe des Fliehgewichtes 53 angeformt ist.

Eine entsprechend der Nase 74 gestaltete Nase 75 bzw. 76 befindet sich auch an den Schwenkarmen 51 und 52.

Auf der Welle 70 ist ferner eine Wickelfeder 77 angeordnet, die sich mit einem Ende 77a an einem in dem Lagerflansch 40 befestigten Stift 78 abstützt und die mit ihrem anderen Ende 79 den Sperrhebel 72 beaufschlagt. Die Wirkrichtung ist dabei so getroffen, daß der Sperrhebel 72 durch die Wickelfeder 77 in die Sperrstellung vorgespannt wird.

Der Ausleger 10 der Keilriemenspannvorrichtung 2 ist, wie in Figur 2 veranschaulicht, zur Aufnahme des Hubmagneten 3 an seinem freien Ende etwa U-förmig abgewinkelt, damit in das so gebildete Profil die Wicklung 90 des Hubmagneten 3 eingeschoben werden kann, wobei der Ausleger 10 gleichzeitig das Magnetjoch bildet. Die Betätigungsrichtung des Hubmagneten 3 steht etwa senkrecht auf der Achse der Keilriemenscheibe 1. In dem Schenkel des Profiles des Auslegers 10, der der Nabe 20 am nächsten benachbart ist, ist eine Bohrung 91 für einen Anker 92 des Hubmagneten vorgesehen.

Der Anker 92 steht mit einem U-Profil 93 in Eingriff, das in einer Ausnehmung 94 des Auslegers 10 schwenkbar gelagert ist. Mittels einer Feder 95, die an denselben Schenkel des U-Profiles 93 angreift wie der Anker 92, jedoch bezogen auf die Lagerstelle an dem gegenüberliegenden Ende, wird der Anker 92 aus dem Hubmagneten 3 so weit herausgezogen, bis sich das U-Profil 93 an der Ausnehmung 94 des Auslegers 10 anlegt. Der freie Schenkel 94 des U-Profiles 93 befindet sich dann außerhalb der Flugbahn des Auslösehebels 71. Das U-Profil 93 ist so bemessen, daß bei Betätigung des Hubmagneten 3 der freie Schenkel 94 des U-Profiles 93 durch den Anker 92 in die Flugbahn des Auslösehebels 71 verschwenkbar ist.

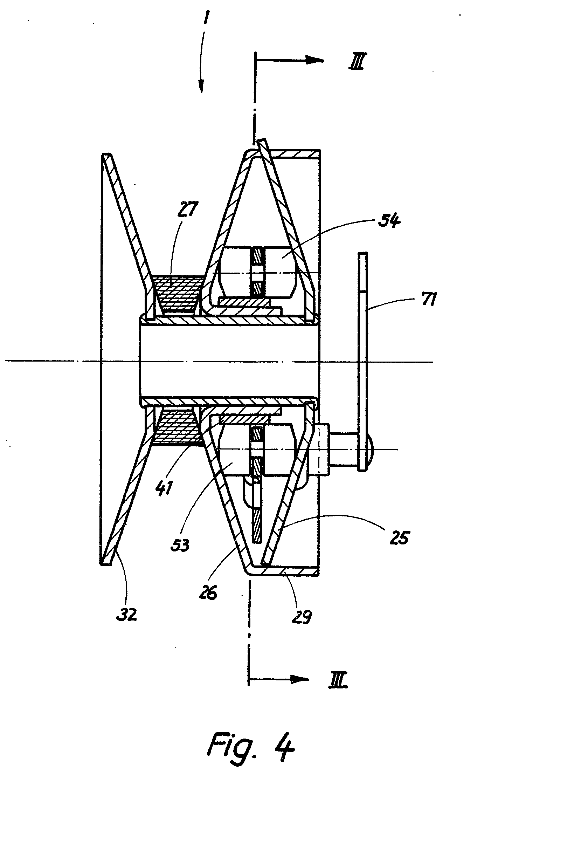

Diese Anordnung hat den Vorteil, daß der Magnet lediglich die Kraft der Feder 95 aufbringen muß und nicht die zum Entriegeln notwendige Kraft. Nach dem Auslaufen des Motors 22 befinden sich die Fliehgewichte 53, 54, 55 mit den jeweils zugehörigen Schwenkarmen 50, 51, 52 in der in den Figuren 3 und 4 dargestellten Lage. Hierbei ist die Nase 74 in die Ausnehmung 73 des Sperrhebels 72 eingeklinkt.

In der in Figur 4 veranschaulichten Stellung der Fliehgewichte 53, 54, 55 ist der verschiebbare Flansch 26 durch die Keilwirkung des Keilriemens 27 am weitesten auf die Stützscheibe 25 zu gedrückt.

Bei einem anschließenden Hochlaufen des Motors 22 sind die Fliehgewichte 53, 54, 55 bestrebt, sich aufgrund der Fliehkraft radial nach außen zu bewegen und die zugehörigen Schwenkarme 50, 51 und 52 entsprechend zu verschwenken. Der Schwenkarm 50 wird an einer derartigen Schwenkbewegung durch die in die Ausnehmung 73 eingerastete Nase 74 gehindert. Die Schwenkbewegung des Schwenkarmes 51 wird dadurch verhindert, daß sich die Anschlagfläche 60 auf dem Fortsatz 63 des im Uhrzeigersinn dahinterliegenden Schwenkarmes 50 abstützt. Eine entsprechende Verriegelung erfährt auch der Schwenkarm 52, dessen Anschlagfläche 61 sich an dem Fortsatz 64 des Schwenkarmes 51 anlegt.

Auf diese Weise sind also die Schwenkarme 51 und 52 durch den jeweils im Uhrzeigersinn davor angeordneten Schwenkarm 50, 51 in der Stellung mit dem kleinsten wirksamen Keilriemenscheibendurchmesser verriegelt.

Wenn der Hubmagnet 3 betätigt wird, wird der freie Schenkel 94 in die Flugbahn des Auslösehebels 71 gebracht, was dann eine Drehung der Anordnung aus Auslösehebel 71 und Sperrhebel 72 gegen den Uhrzeigersinn hervorruft, wobei die Anordnung aufgrund der Fliehkraft gegen die Wirkung der Feder 77 in der gedrehten Stellung bleibt, bis sich die Drehzahl der Keilriemenscheibe 1 verringert. Der Flugkreis des Auslösehebels 71 hat somit einen kleineren Durchmesser als in der Ausgangsstellung, was ein ständiges Streifen des Auslösehebels 71 an den eingeschwenkten Schenkel 94 des U-Profiles 93 verhindert. Durch diese Verschwenkung des Sperrhebels 72 kommt die Nase 74 des Schwenkarmes 50 aus der Ausnehmung 73 frei und ermöglicht eine radiale Fliehbewegung des Fliehgewichtes 53. Durch diese Fliehbewegung wird der Schwenkarm 50 nach außen verschwenkt und der Fortsatz 63 entfernt sich von der Anschlagfläche 60 des Schwenkarmes 51, wodurch es auch dem Schwenkarm 51 möglich ist, sich nach außen zu bewegen. Der gleiche Vorgang läuft auch zwischen dem Fortsatz 64 und der Anschlagfläche 61 des Schwenkarmes 52 ab. Aufgrund des Auswanderns der Fliehgewichte in radial weiter außenliegende Bereiche der Keilriemenscheibe wird der bewegliche Flansch 25 durch die sich an der Stützscheibe 25 abstützende Fliehgewichte 53, 54, 55 auf den feststehenden Flansch 32 zu bewegt. Die Annäherung des beweglichen Flansches 26 an den starren Flansch 32 bewirkt, daß sich nunmehr der Keilriemen auf einem größeren Durchmesser um die Motorwelle 21 herumbewegen muß.

Die Radialbewegung der Fliehgewichte 53, 54, 55 hält solange an, bis sich die Nasen 74, 75 und 76 der jeweils zugehörigen Schwenkarme 50, 51, 52 an dem zylinderförmigen Ansatz 29 anlegen. In dieser Stellung ist gleichzeitig der größte wirksame Keilriemenscheibendurchmesser erreicht.

Erst wenn die Motordrehzahl einen vorgegebenen Wert unterschreitet, ist die durch den Keilriemen 27 aufgebrachte axial wirkende Kraftkomponente größer als die axial wirkende Kraftkomponente der Fliehgewichte 53, 54, 55, so daß diese durch die konusförmigen Flächen der Stützscheibe 25 und des verschiebbaren Flansches 26 radial nach innen gedrückt werden, bis sie schließlich wieder die in den Figuren 3 und 4 dargestellte Lage einnehmen.

Die Keilriemenspannvorrichtung 2 dient dazu, den Keilriemen, der außen um die Spannrollen 6, 7 und die Keilriemenscheibe 1 herumgeführt ist, auch dann gespannt zu halten, wenn der kleinste wirksame Keilriemenscheibendurchmesser eingestellt ist. Hierzu bewegt sich aufgrund der Wirkung der Feder 8 der Spannarm 5 mit der Spannrolle 6 relativ zu dem Spannarm 4 mit der Spannrolle 7.

Durch die drehbare Lagerung der Keilriemenspannvorrichtung 2 auf der Motorwelle 21 bzw. der Nabe 20 ergibt sich der Vorteil, daß sich die Spannrollen frei pendelnd so einstellen können, daß von der Keilriemenspannvorrichtung 2 unabhängig von der jeweils benötigten Drehrichtung des Motors 22 bei den einzelnen Reversiervorgängen der Waschtrommel nur die zum Spannen des Keilriemens 27 benötigten Kräfte aufgebracht werden müssen. Es besteht nämlich bei der erfindungsgemäßen Keilriemenspannvorrichtung nicht die Notwendigkeit, die Spannarme 4 und 5 so stark zu dimensionieren, daß sie mindestens bei einer der auftretenden Drehrichtungen die volle Querkraft aufnehmen können, die auf den jeweiligen Spannarm einwirkt, wenn der Arbeitstrum des Keilriemens 27 voll belastet ist.

- 1 -

0033937

Patentansprüche:

1. Antriebsvorrichtung für Waschmaschinen mit einer auf der Antriebswelle des Motors angeordneten Keilriemenscheibe, deren wirksamer Durchmesser verstellbar ist, mit einem feststehenden Flansch und einem gegen diesen axial verschiebbaren drehfesten Flansch, der durch an einer Stützscheibe sich abstützende Fliehgewichte verschiebbar ist, die durch eine entriegelbare Sperreinrichtung in der Stellung mit dem kleinsten wirksamen Keilriemenscheibendurchmesser gehalten sind, dadurch gekennzeichnet, daß die Sperreinrichtung achsparallel gelagerte, die Fliehgewichte (53, 54, 55) tragende Schwenkarme (50, 51, 52) enthält, die bis auf einen Schwenkarm (50) durch den, bezogen auf einen Umlaufsinn, jeweils davor angeordneten Schwenkarm (50, 51) verriegelt sind, und der nicht durch einen benachbarten Schwenkarm verriegelte Schwenkarm (50) in einen Sperrhebel (72) einrastbar ist, der durch einen exzentrisch angeordneten Auslösehebel (71) betätigbar ist.

2. Antriebsvorrichtung nach Anspruch 1, dadurch gekennzeichnet, daß die Keilriemenscheibe (1) eine Nabe (20) aufweist, auf der ein Lagerflansch (40) verschieblich gehaltert ist, der sich zwischen der auf der Nabe (20) befestigten Stützscheibe (25) und dem verschiebbaren Flansch (26) befindet und an dem die Schwenkarme (50, 51, 52) angelenkt sind.

0033937

3. Antriebsvorrichtung nach Anspruch 2, dadurch gekennzeichnet, daß mit Ausnahme von einem Schwenkarm (50) alle übrigen Schwenkarme (51, 52) an ihrem lagerseitigen Ende jeweils eine Anschlagfläche (60, 61) aufweisen, die sich, den zugehörigen Schwenkarm (51, 52) in der Stellung für den kleinsten wirksamen Keilriemenscheibendurchmesser haltend, an einem Fortsatz (63, 64) des jeweils benachbarten Schwenkarmes (50, 51) abstützt, und daß der ohne Anschlagfläche ausgebildete Schwenkarm (50) an dem dem lagerseitigen Ende gegenüberliegenden Ende eine Nase (74) aufweist, die in eine Ausnehmung (73) des an dem Lagerflansch (40) gelagerten Sperrhebels (72) einrastbar ist.

4. Antriebsvorrichtung nach Anspruch 3, dadurch gekennzeichnet, daß die übrigen Schwenkarme (51, 52) ebenfalls mit einer Nase (75, 76) ausgerüstet sind, und der verschiebbare Flansch (26) an dem äußeren Umfang einen zylinderartigen, die Stützscheibe umgreifenden Ansatz (29) aufweist, der für die Nasen (74, 75, 76) der radial nach außen verschwenkbaren Schwenkarme (50, 51, 52) einen Anschlag bildet.

5. Antriebsvorrichtung nach Anspruch 4, dadurch gekennzeichnet, daß der verschiebbare Flansch (26) mit der Stützscheibe (25) drehfest gekuppelt und gegenüber der Stützscheibe (25) axial verschieblich ist.

6. Antriebsvorrichtung nach Anspruch 5, dadurch gekennzeichnet, daß zur drehfesten Kupplung der zylinderartige Ansatz (29) in Richtung der Nabenachse verlaufende Schlitze (30) aufweist, in die an die Stützscheibe (25) angeformte Mitnehmer (31) eingreifen.

7. Antriebsvorrichtung nach Anspruch 2, dadurch gekennzeichnet, daß der verschiebbare Flansch (26) eine auf der Nabe (20) gelagerte Hülse (28) aufweist, auf der der Lagerflansch (40) der Schwenkarme (50, 51, 52) verschieblich gelagert ist.

8. Antriebsvorrichtung nach Anspruch 1, dadurch gekennzeichnet, daß der Auslösehebel (71) durch einen ortsfest angebrachten Hubmagneten (3) betätigbar ist.

9. Antriebsvorrichtung nach den Ansprüchen 1 und 2, dadurch gekennzeichnet, daß sie eine Keilriemenspannvorrichtung (2) aufweist, die entweder unmittelbar auf der Motorwelle (21) oder auf der einseitig verlängerten Nabe (20) gelagert ist.

10. Antriebsvorrichtung nach Anspruch 9, dadurch gekennzeichnet, daß die Keilriemenspannvorrichtung (2) zwei zueinander etwa V-förmig angeordnete Spannarme (4, 5) aufweist, die an ihren äußeren Enden jeweils eine drehbar gelagerte Spannrolle (6, 7) tragen, die mit der Keilriemenscheibe (1) fluchten, und daß einer der Spannarme (5) gegenüber dem anderen Spannarm (4) federvorbelastet verschwenkbar ist.

- 4 -

0033937

11. Antriebsvorrichtung nach Anspruch 10, dadurch gekennzeichnet, daß die Keilriemenspannvorrichtung (2) einen Ausleger (9) enthält, an dem eine den schwenkbaren Spannarm (5) in die Keilriemenspannstellung vorspannende Feder (8) angreift.

12. Antriebsvorrichtung nach Anspruch 10, dadurch gekennzeichnet, daß die Keilriemenspannvorrichtung (2) und die Spannrollen (6, 7) jeweils mit selbstschmierenden Bronzelagern (23) gelagert sind.

13. Antriebsvorrichtung nach den Ansprüchen 8 und 9, dadurch gekennzeichnet, daß der Hubmagnet (3) an der Keilriemenspannvorrichtung (2) befestigt ist.

14. Antriebsvorrichtung nach Anspruch 13, dadurch gekennzeichnet, daß der Hubmagnet (3) ein in eine Endlage federvorgespanntes und in der Keilriemenspannvorrichtung (2) gelagertes U-Profil (93) aufweist, dessen einer Schenkel durch einen Anker (92) des Hubmagneten (3) beaufschlagt ist und dessen anderer Schenkel (94) bei der Betätigung des Hubmagneten (3) in die Flugbahn des Auslösehebels (71) bringbar ist.

Fig. 1

Fig. 2

0033937

Fig. 3

Fig. 4

Fig.5

Fig. 6

| | **EINSCHLÄGIGE DOKUMENTE** | | KLASSIFIKATION DER ANMELDUNG (Int Cl ) |
|---|---|---|---|
| Kategorie | Kennzeichnung des Dokuments mit Angabe. soweit erforderlich, der maßgeblichen Teile | betrifft Anspruch | |
| D | <u>DE - A - 1 933 045</u> (SIEMENS) <br> * Seite 4, Zeile 28 - Ende; Seite 5; Seite 6, Zeilen 1-4 * | 1 | D 06 F 37/36 <br> F 16 H 55/56 |
| | <u>DE - A - 2 441 009</u> (OUTBOARD MARINE) <br> * Seite 22, Zeilen 30-31; Seiten 23-25 * | 1 | |
| A | <u>US - A - 4 157 042</u> (McMILLAN) <br> * Spalte 7, Zeilen 34-65; Anspruch 1; Figuren * | 1,8,9 | RECHERCHIERTE SACHGEBIETE (Int Cl ) <br><br> D 06 F <br> F 16 H <br> F 16 D <br> H 02 K |
| A | <u>FR - A - 1 291 581</u> (THOMSON-HOUSTON) <br> * Zusammenfassung; Figuren * | 1 | |
| A | <u>FR - E - 84 027</u> (THOMSON-HOUSTON) <br> * Zusammenfassung; Figuren * | 1 | |
| A | <u>DE - A - 2 401 385</u> (JOHANSSON) <br> * Figuren 1-3; Seite 4, Zeile 11 - Ende; Seiten 5-7; Seite 8, Zeilen 1-6 * | 1 | |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-05-1981 | D'HULSTER |

EPA form 1503.1    06.78